# EUROPEAN PATENT APPLICATION

(11) **EP 1 574 325 A2**
(43) Date of publication of application: **14.09.2005**
(21) Application number: 05012726.5
(22) Date of filing: 20.11.2001
(51) Int. Cl.: B32B 5/18, B65D 81/28, B65D 75/00

(54) **Multi-laminae food storage wrap**

(30) Priority: 22.11.2000 US 718686
(62) Divisional of application: 01995144.1
(71) Applicant: THE PROCTER & GAMBLE COMPANY, Cincinnati, Ohio 45202 (US)
(72) Inventor: O'Brian, Michael John, Cincinnati, OH 45236 (US); Pallotta, Shawn, Christopher, Maineville, OH 45039 (US); Toussant, John William, West Chester, OH 45069 (US)
(74) Representative: Veronese, Pancrazio

(57) **Abstract**

A laminate comprising first and second laminae. An active is disposed between the first and second laminae. At least one of the laminae is permeable to the active. Holes may be provided to make that lamina permeable. The active is extruded through the holes upon pressure applied generally perpendicular to or in shear relative to the plane of the laminate. The active may be a pressure sensitive adhesive. The laminate is usable as a wrap to temporarily seal or otherwise protect contents, which are typically perishable. The contents may be enclosed by the laminate or placed in a separate container which is covered by the laminate.

## Description

### FIELD OF INVENTION

The present invention relates to laminates having an active disposable onto a target surface at the point of use. The laminate is usable as a food storage wrap.

### BACKGROUND OF THE INVENTION

Sheet-like materials are known for use in the containment and protection of various items, particularly the preservation of perishable materials such as food items. Such materials can be utilized to wrap items individually and/or can be utilized to form a closure for a semi-enclosed container. Particularly, food storage wraps are used to cover bowls, dishes of leftovers and even to completely enclose food items desired to be refrigerated or otherwise stored.

One class of such materials in common use today comprises those of polymeric composition formed into a thin, conformable web commonly supplied in rolled form. Common examples of such materials are polypropylene, polyvinyl chloride (PVC), polyvinylidene chloride (PVDC), and polyethylene (PE) sheet materials. These materials exhibit a clinging character on at least one surface due to the properties of the polymeric materials they are formed from and/or additives such as plasticizers, tackifiers, etc., such that they may be folded or wrapped around an item such that they cling to the item and/or to themselves. The clinging character of such materials also permits their use in combination with semi-enclosed rigid, semi-rigid, or flexible containers to provide a fully enclosed container structure. The barrier properties of many such materials, particularly their oxygen, moisture/moisture vapor, and odor barrier properties, provide the desired preservation characteristics for perishable items such as food items and/or items which oxidize, dehydrate or otherwise degrade more rapidly with continued exposure to environmental conditions.

While these materials have achieved a certain level of acceptance, where the material is supplied in the form of a continuous roll in a dispensing carton or apparatus, difficulty is often encountered locating and isolating the current end portion of the rolled web in order to start the dispensing operation. In order to address this issue, a number of methods of identifying and/or isolating the current end of the rolled web have been developed (tabs, colors, end-grasping dispenser features, etc.) which have achieved varying levels of success. Irregardless of the issue of handling the end of the rolled web, the tendency of the material to cling to itself also increases the dispensing force required to unroll the web and tangentially separate the dispensed portion and, if excessive, can lead to a phenomenon known as "roll blocking" wherein the dispensing force to unroll becomes excessive. Roll blocking can also cause excessive dispensing forces which can lead to longitudinal tearing of the web in the roll direction, leading the user to dispense a narrower, unevenly-torn portion of the rolled web. In addition, users frequently encounter situations wherein the material clings to itself prematurely (i.e., before contacting the desired bonding surface), thus necessitating either the manual disengagement of the clinging portion(s) and/or discarding of the material in favor of a new portion.

One attempt to overcome this problem is by adding a release strip, also known in the art as a cover strip to the adhesive coated face of the web. At the point of use, the release strip is removed and discarded. However, the use of the release strip add cost and complexity to the final product.

Attempts to obviate the use of release strips are found in the art related to tape tabs for disposable diapers. Such tape tabs are small and must be manipulated in manufacturing to assure they will be in the proper position for convenient use with a baby who may not cooperate with the diaper change. These attempts are illustrated by the following U.S. patents: U.S. Pat. no. 3,967,624 issued July 6, 1976 to John P. Milnamow, U.S. Pat. no. 3,853,129 issued Dec. 10, 1974 to Theodore F. Kozak, U.S. Pat. no. 4,067,337 issued Jan. 10, 1978 to Irving Stanley Nees, U.S. Pat. no. 4,063,559 issued Dec. 20, 1977 to Ludwig Tritsch, U.S. Pat. no. 4,010,753 issued March 8, 1977 to Ludwig Tritsch, and U.S. Pat. no. 3,853,129 issued Dec. 10, 1974 to Theodore F. Kozak. A related attempt is found in U.S. Pat. no. 5,736,470 issued Apr.7, 1998 to Schneberger et al. which teaches pressure sensitive adhesive articles.

Another difficulty which may be encountered with food storage wraps is the failure of the material to form an adequate seal where folded either from the outset or after a period of handling of the container or wrapped item. If such materials cannot form a seal with barrier properties at least as great as those of the material itself, the full potential of such materials in use as a storage wrap cannot be realized as the seal becomes the weakest link in terms of containerization. Accordingly, some users undertake to employ additional securement features such as rubber bands, tapes, etc. Wrinkles in the material where it meets itself or a target surface can leave small channels in the region between the material and the opposing surface, thereby causing a failure to achieve the desired seal quality for preservation of perishable items. Some users attempt to address seal quality shortcomings by double- or triple-wrapping the desired item to form a tortuous labyrinth seal path of increased length.

An improved storage wrap material is found in commonly assigned U.S. Patent Application Serial No. 08/745,340, filed Nov. 8, 1996 in the names of Hamilton et al. (P&G Case 5922R2) and incorporated herein by reference. Yet, further attempts are illustrated by U.S. Pat. Nos. 5,334,693, issued Sep. 6, 1994 to Sanders, and 5,948,493, issued Sep. 7, 1999 to Groeger.

However, the foregoing attempts in the art are generally directed single lamina constructions having adhesive as the active to be delivered. The user may desire a plural laminae construction. Providing a selectively activatable laminate of two or more laminae provides the benefits that different materials may be utilized in each of the laminae. For example, the laminae may be of different colors, opacities, strength and cost. This construction is provided with the invention disclosed and claimed hereinbelow.

Another difficulty which may be encountered with food storage wraps is the failure of the material to adhere to itself and/or the desired target surface sufficiently to form an airtight seal either from the outset or after a period of handling of the container or wrapped item. If such materials cannot form a seal with barrier properties at least as great as those of the material itself, the full potential of such materials in use as a storage wrap cannot be realized as the seal becomes the weakest link in terms of containerization. Accordingly, some users employ additional securement features such as rubber bands, tapes, etc. Wrinkles in the material where it clings to itself or a target surface can leave small channels in the region between the material and the opposing surface, thereby causing a failure to achieve the desired seal quality for preservation of perishable items. Some users attempt to address seal quality shortcomings by double- or triple-wrapping the desired item to form a tortuous labyrinth seal path of increased length.

Also, because the materials "cling" to themselves and other surfaces, i.e., exhibit an attraction or affinity for the material rather than an adhesive bond, their affinity for a complementary surface is highly dependent upon material characteristics such as chemical composition, electrical conductivity, surface energy, surface finish, etc. Therefore, such materials leave room for improvement both in ease of use as well as ability to form an adequate seal for preservation of perishable items. In many instances, the plasticizers, tackifiers, and other cling additives utilized to provide the cling properties of such materials may also introduce undesirable attributes such as odor to the finished web and/or may introduce environmental concerns.

Another class of materials in common use today comprises thin, conformable webs of various compositions commonly supplied in individual sheet or rolled form. Common examples of such materials include aluminum foil, coated (waxed, etc.) paper, etc. These materials exhibit no adhesive or cling character on either surface, instead relying upon the dead-fold characteristics of the materials they are formed from such that they may be folded or wrapped around an item and retain their folded or wrapped shape. The ability of these materials to maintain their folded or creased shape also permits their use in combination with semi-enclosed rigid, semi-rigid, or flexible containers to provide a fully enclosed container structure. The barrier properties of many such materials, particularly their oxygen, moisture/moisture vapor, and odor barrier properties, provide the desired preservation characteristics for perishable items such as food items and/or items which oxidize or otherwise degrade more rapidly with continued exposure to environmental conditions.

U.S. Pat. No. 5,141,790, issued Aug. 25, 1992 to Calhoun et al., discloses pressure sensitive adhesive tape having a carrier web with depressions which protect clumps of particles. U.S. Pat. No. 4,061,820, issued to Magid et al., discloses a foam with cells. The foam is compressed to open cell cavities at the foam surface so that pressure sensitive adhesive can be applied to the open cells. When the foam is released, the cells close and hide the adhesive. When the foam is pressed, the cells bring pressure sensitive adhesive to the surface for sticking the foam to a target surface.

U.S. Pat. No. 4,959,265, issued to Wood et al., discloses an adhesively coated substrate having bluntly pointed stems protruding beyond a layer of pressure sensitive adhesive. U.S. Pat. No. 5,344,693, issued to Sanders, discloses a substrate having a plurality of non-interconnecting spacing means extending outwardly from an adhesive coated surface to space the surface from another surface until the surfaces are pressed together. The spacing means of Sanders is non-deformable. Sanders points out that prior art discloses deformable spacing means where force is applied to a surface of interest, but that his spacers are non-deformable so that spacing will be maintained when the substrate is stored in a roll. The spacing members are spaced not more than 80 times the dimension of each spacer. U.S. Pat. No. 5,453,296, issued to Lauritzen et al., describes a method for making a sanitary napkin which has recessed adhesive pattern for attachment to a user's undergarment.

U.S. Pat. no. 3,515,270 issued June 2, 1970 to Tonn et al. teaches a presure sensitive adhesive coated sealable substrate. The substrate is coated with pressure sensitive adhesive which, in turn, has a shrinkable protecting sheet bonded thereto. The protecting sheet has slits therethrough. Upon the application of heat to the protecting sheet, portions of the sheet shrink away from the slits, exposing the adhesive. This arrangement provides the disadvantage that an additional step, i.e. the application of heat in a quantity sufficient to cause the desired shrinkage, but not so great as to cause damage, must be performed. Further, the material selection for the sheet through which the adhesive is exposed is limited to heat shrinkable materials, i.e. materials which respond, by shrinking, on the application of heat.

Commonly assigned U.S. Patent Application Serial Nos. 09/358,136, filed July 20, 1999 in the names of McGuire et al. (P&G Case 7623R) and 09/289,222, filed April 9, 1999 in the names of McGuire et al. (P&G Case No. 7494), and commonly assigned Patent Application WO 98/21410, published May 22, 1998 in the names of Hamilton et al. (P&G Case 5922R2) are incorporated herein by reference. WO 98/52458, published Nov. 26, 1998 in the names of Fereshtehkhou et al., and incorporated herein by reference, discloses cleaning sheets having scrim material.

Commonly assigned U.S. Pat. No. 5,662,758, issued to Hamilton et al., discloses flexible film having pressure sensitive adhesive protected from inadvertent adherence. Commonly assigned U.S. Pat. No. 5,871,607, issued to Hamilton et al., discloses a substance delivery system having a three-dimensional structure with spaces for containing a substance. Commonly assigned U.S. Pat. No. 5,965,235, issued to McGuire et al., discloses a sheet material which resists nesting of superimposed layers. This provides the benefit of minimizing inadvertent contact with a substance placed within hollow protrusions of the material. The three aforementioned commonly assigned U.S. patents are incorporated herein by reference.

### SUMMARY OF THE INVENTION

The invention comprises a laminate of two or more laminae joined in face to face relationship. Each lamina comprises an essentially continuous network. An active is disposed between the laminae. At least one of the laminae is permeable to the active. Upon the application of force to the laminate, the active may be exposed through the permeable lamina. Upon exposure, the active may contact or influence a target surface.

In one embodiment the laminate may be made by providing a first lamina. The active is disposed upon the first lamina. Then a second lamina is extruded from a plurality of nozzles to form an essentially continuous network. The essentially continuous network forms a second lamina which overlays the active. Upon the application of force to the laminate, the active may be exposed through the second lamina.

The laminate may have sufficient flexibility, size, and FDA approval to be usable as a food storage wrap. If so, the active may comprise an adhesive.

### DESCRIPTION OF THE DRAWINGS

Fig. 1 is a fragmentary top plan view of an exemplary laminate according to the present invention, shown partially in cutaway.
Fig. 2 is a vertical sectional view taken along lines 2-2 of Fig. 1.
Fig. 3 is a schematic perspective view of an apparatus and process for making one embodiment of the present invention.

### DETAILED DESCRIPTION OF THE INVENTION

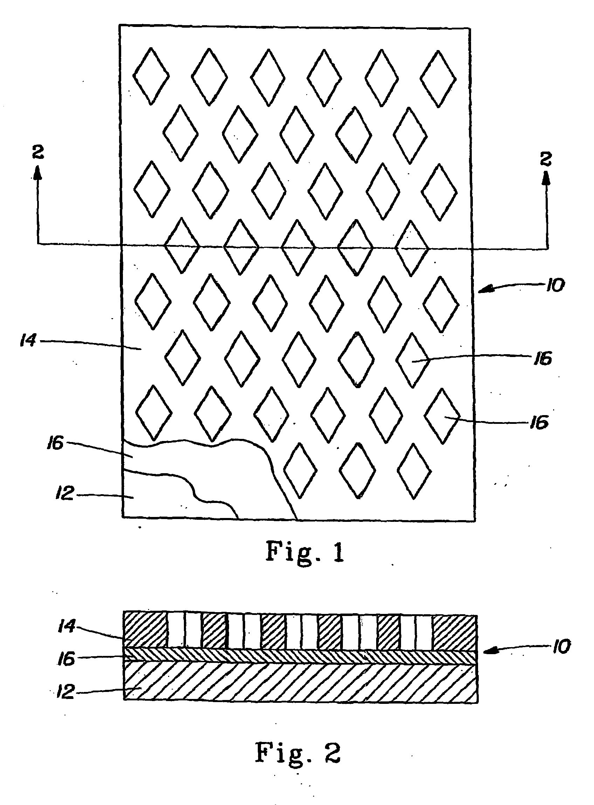

Referring to Figs. 1-2, the invention comprises a laminate 10 of two or more laminae 12, 14 and an intermediate active 16. While it is to be understood that any plural number of laminae may be utilized according to the present invention, the specific embodiment described below comprises a first lamina 12 and a second lamina 14. Each of the first lamina 12 and second lamina 14 comprise first and second opposed faces. The first and second laminae 12, 14 are joined in face-to-face relationship. In this arrangement, the first face of the first lamina 12 is oriented towards and contacts the first face of the second lamina 14 and vice versa. The second faces of the first and second laminae 12, 14 are outwardly oriented.

The laminate 10, and each of the laminae 12, 14 define an XY plane and a Z-direction orthogonal thereto. The laminate 10 may be made in a machine direction and have a cross machine direction orthogonal thereto.

As defined herein, the active 16 is any substance applied to or integral with the laminate 10 and which provides a functional benefit not obtainable from the substrates of either the first lamina 12 or second lamina 14 individually, or both laminae 12, 14 taken together. Alternatively, stated, the active 16 may be thought of as a substance which influences the properties of the laminate 10, delivers a benefit not obtainable strictly from the laminae 12, 14, or which influences a target surface to which the laminae 12, 14 may be applied or placed in contact. While the invention is described hereinbelow as comprising only a single active 16, one of ordinary skill will recognize that a plurality of actives 16 may be used in accordance with the present invention.

The active 16 may be disposed upon or otherwise associated with the first surface of the first lamina 12, the first surface of the second lamina 14, or both. Additionally, the active 16 may be disposed upon or otherwise associated with the second surfaces of either the first and/or second laminae 12, 14. Of course, one of ordinary skill will recognize that a first active 16 may be associated with the first faces of either the first and/or second laminae 12, 14, and optionally, the same and/or a different active 16 may be associated with the second faces of either the first and/or second laminae 12, 14.

### First Lamina

The first lamina 12 may comprise an essentially continuous network. As defined, an essentially continuous network includes any geometric arrangement which extends to the edges of the laminate 10 in both the X and Y, or the machine and cross machine, directions. An essentially continuous network may resemble a fishnet-type pattern as illustrated in Fig. 1. Essentially continuous networks also include solid, impermeable laminae 12, 14, as well as laminae 12, 14 having discrete apertures therethrough. It is preferred, but not necessary, the first lamina 12 be of constant basis weight and density.

The first lamina 12 is preferably deformable, so that it will move in the Z-direction relative to the second lamina 14. Such movement is in response to Z-direction compressive or shear forces applied to the laminate 10. Such movement preferably allows the first lamina 12 to deliver active 16 through the second lamina 14 and to a target surface.

If it is desired that the first lamina 12 be breathable, preferably it has an open area of not more than 10% in one execution, not more than 15% in another execution, and not more than 20%. A breathable first lamina 12 may be desirable where the expected end use of the laminate 10 is as a bandage, or other application where transmission of vapors may be appropriate.

A solid, or impermeable, first lamina 12 may be utilized where it is desired to use the laminate 10 for sealing purposes, as occurs in the case of a food wrap or for the preservation of other materials where the user wishes to prevent contact with oxygen.

The properties of a selected deformable material can include, though are not restricted to, combinations or degrees of being: porous, nonporous, microporous, gas or liquid permeable, impermeable, hydrophilic, hydrophobic, hydroscopic, oleophilic, oleophobic, high critical surface tension, low critical surface tension, surface pre-textured, elastically yieldable, plastically yieldable, electrically conductive, and electrically non-conductive. It is to be understood that transfer through the laminae 12, 14 and the permeability or impermeability thereof refer to such properties relative to an active 16 disposed thereon.

The first lamina 12 may include foil polymer sheets, cloth, wovens or nonwovens, paper, cellulose fiber sheets, co-extrusions, laminates, and combinations thereof. A suitable first lamina 12 may be made of a polymeric film. A particularly suitable first lamina 12 may be made of a polyolefinic film, such as HDPE having a thickness of 0.013 milllimeters.

### Second Lamina

The second lamina 14 should be perforate, i.e., have holes therethrough. The holes extend entirely through the second lamina 14, so that active 16 disposed on the first face of the first lamina 12, the first face of the second lamina 14, or otherwise interposed between the first and second laminae 12, 14 may be extruded or otherwise transported through the holes. Extrusion or transport through the holes brings the active 16 to the second surface of the second lamina 14. At this position, the active 16 may contact and act upon the target surface.

The second lamina 14, and first lamina 12, may be deformable in the Z direction in response to compressive or shear forces applied thereto. Deformation of the laminae 12, 14 allows for transfer of one or more actives 16 from an intermediate position within the laminate 10 to one of the outwardly oriented faces of the respective laminae 12, 14. The deformation of the laminae 12, 14 may be elastic and last long enough to allow the active 16 to reach the target surface. Alternatively the deformation may be plastic, so that the laminae 12, 14 do not recover in thickness when the applied force is released. In an embodiment that has been found to work well the second lamina 14 does not fully recover in thickness when an applied compressive force is removed, rendering the deformation plastic and relatively permanent.

The second lamina 14 should be deformable in the Z-direction under forces which can be manually applied during and convenient for the intended use. The forces may be shear or compressive. Preferably the laminate 10 adheres to the target surface upon application of a compressive force of 70.3 kg/square meter or less.

The first and second laminae 12, 14 have first and second thickness, respectively. Likewise the active 16 has a third thickness. The thickness of the active can be less than the thickness of the second lamina 14 prior to and even after deformation, and still have transfer of the active 16 through the second lamina 14.

The second lamina 14 may have a thickness ranging from 0.08 to 0.4 millimeters in a first execution, and 0.08 to 0.2 millimeters in a second execution. The thickness should not be so great that it prevents the active 16 from contacting or otherwise influencing the target surface. The thickness is typically specified by the manufacturer of the second lamina 14 as a nominal thickness.

The manufacturer may also specify the open area and/or strand diameter/thickness of the ligaments (if the cross section of the ligaments is not circular). Knowing either of these parameters, and the pitch of the ligaments, one of skill can easily calculate the other. The second lamina 14 may have an open area ranging from 40 to 95% in one execution, to 50 to 65% in another execution, and 50 to 55% in another execution. The open area of the second lamina 14 should be maintained after the compressive or shear forces are applied to the laminate 10. Maintaining the open area after the application of forces allows the active 16 to contact or otherwise influence the target surface. Open area may be measured using standard image analysis techniques, as are well known in the art.

Generally there may be a directly proportional relationship between the open area and the thickness of the second lamina 14. As the thickness increases, the open area should likewise increase, in order to maintain sufficient open area for the active 16 to contact or otherwise influence the target surface after deformation. However, there is an inversely proportional relationship between the required thickness of the active 16 and the open area of the second lamina 14. As the thickness of the active 16 increases, less open area may be required for the active 16 to contact or otherwise influence the target surface.

Suitable materials for the second lamina 14 include apertured formed films as described in commonly assigned U.S. pat nos. 3,929,135 issued to Thompson and 4,342,314 issued to Radel et al., both incorporated herein by reference. The second lamina 14 may also comprise scrim. If scrim is selected for the second lamina 14, preferably it imparts strength to the resulting laminate 10 However, the laminate 10 should not be so strong that it is difficult to tear so that a conveniently sized implement may be easily dispensed. Suitable scrims are available from applied Atlantic Extrusion Co. of Salem, MA, Applied Extrusion Technologies of Middletown, DE and sold under the name Delnet TK16-35P, and from Conweb of Minneapolis, MN and sold under the name RO3650-024. Such laminae 14 are typically supplied in roll form, or may be festooned in a box.

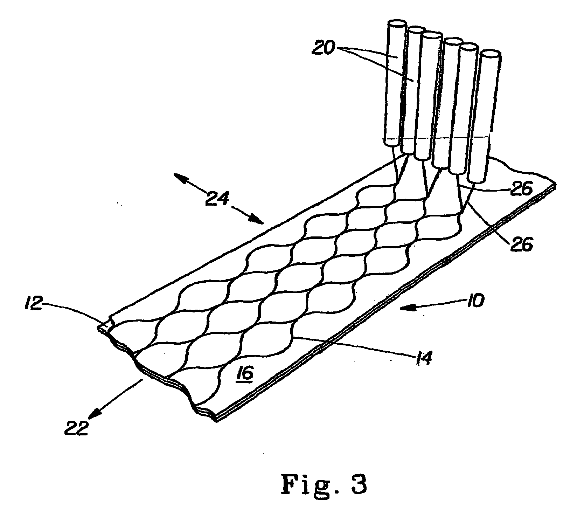

Referring to Fig. 3, the second lamina 14 may be extruded onto the first lamina 12 and active 16. The extrudate is supplied through a plurality of nozzles 20. The first lamina 12, with active 16 disposed thereon, are transported relative to the nozzles 20 which are held in position. Alternatively, the first lamina 12 and active 16 may be held in position and the nozzles 20 moved. In either embodiment the movement occurs in a first direction 22, which may be referred to as the machine direction.

The second lamina 14 may comprise a thermoplastic polymer, such as polyethylene or polypropylene. One or more nozzles 20 may extrude the material in the form of an extrudate 26 which forms the second lamina 14 while the first lamina 12 and active 16 are transported relative to the nozzle(s). Suitable nozzles may be obtained from ITW Dynatec of Glenview, IL under the Uniform Fiber Deposition Omega nozzles 20. Any desired number of nozzles 20 may be used, with the nozzles 20 arranged to provide the desired width and open area of second lamina 14.

The extrudate 26 is in the form of beads. The extrudate 26 is oscillated in a second direction 24. The second direction 24 is generally perpendicular to the first direction and may be referred to as the cross machine direction. The oscillation may be accomplished by the nozzles 20 as is well known in the art, or by relative motion between the nozzles 20 and the first lamina 12 which occurs in the second direction 24. In yet another embodiment, plural nozzles 20 may be offset in the second direction 24. The offset nozzles 20 may be disposed in two or more banks. The banks of nozzles 20 intermittently extrude the beads of extrudate 26. Such intermittent extrusion will provide a pattern of oscillatory beads which yields a second lamina 14. If the beads of extrudate 26 are applied intermittently, and the active 16 comprises a continuous layer of adhesive, a continuos seal may be advantageously formed when the laminate 10 is applied to a target surface.

The nozzles 20 oscillatorily extrude the beads in a sinusoidal or omega pattern. Adjacent beads may be approximately 180 degrees out of phase. The beads touch adjacent beads at the crests, or maxima and minima of the sinusoidal or omega patterns. By touching adjacent beads only at these points a fishnet pattern comprising an essentially continuous network is obtained. Alternatively, adjacent beads of extrudate 26 may overlap, intersecting to form an essentially continuous network. Such an essentially continuous network may have a relatively high open area.

Prophetically, an open area exceeding 90% may be feasible, particularly if adjacent beads of extrudate 26 do not touch or intersect. Beads of extrudate 26 which are straight, curvilinear, and/or parallel may be used as desired for the second lamina 14. In a prophetic embodiment, the beads of extrudate 26 may be intermittently applied. This arrangement provides a discrete second lamina 14, and thus a continuous seal when the laminate 10 is used to cover the opening of a food container.

The beads are cured to form the second lamina 14. The second lamina 14 has a thickness. Such thickness may be greater than that of the active 16 which is interposed, or trapped, between the laminae 12, 14.

While second laminae 14 which form a rectilinear grid are described and illustrated above, it is to be recognized that the invention is not so limited. For example, a second lamina 14 which has an arrangement of holes arranged in a grid, holes which are unilaterally staggered, or bilaterally staggered may be utilized. Alternatively, the holes in the second lamina 14 need not occur in a regular and repeating pattern. The holes may be randomly oriented. If desired, a high open area discretely apertured or diaphanous nonwoven may be utilized as the second lamina 14.

The resulting laminate 10 should be able to conform to a target surface, such as an irregularly shaped perimeter to a food container, a round bowl or other curvilinearly-shaped object. Also, the resulting laminate 10 must be able to seal to the surface if adhesive is used for the active 16.

### The Active

Suitable actives 16 comprise antimicrobials including viricides and bacteriacides, cleaning agents, perfumes, adsorbents and particularly adhesives. If an adhesive is selected for the active 16, preferably it is a pressure sensitive adhesive. The pressure sensitive adhesive may either be water based, water borne, solvent based or a hot melt adhesive. The adhesive should have adequate force to hold the laminate 10 to the target surface in normal use, but not be so strong as to provide undue effort to remove the laminate 10 from the target surface. Additionally, the adhesive should not leave any residue. The adhesive should be FDA approved for food grade applications if the resulting laminate 10 is to be used to seal perishable items in a food container or have direct contact with food items.

The active 16 utilized in combination with the deformable laminae 12, 14 may exhibit certain physical properties which enable it to be dispensed from its protected orientation within the three-dimensional structure of the laminate 10 and applied to the target surface. Such dispensation may be partial, or substantially or totally complete in nature. For example, if the laminate 10 is to be used as a tamper evident seal, residue may remain on the target surface. If the laminate 10 is to be used to dispense medication to the skin, active 16 is preferably copiously transferred to the target surface.

Alternatively, the active 16 may be selected so as to remain associated with laminae 12, 14 during its deployment into contact with the target surface. One example of a active 16 intended to remain associated with the sheet material would be a layer of hot melt adhesive. Any adhesive can be used which suits the needs of the material application. Adhesives may be refastenable, releasable, resealable, permanent, or otherwise. Resealable adhesives are preferred if multiple uses of the same laminate 10 are expected.

The active 16 should have sufficient viscosity to withstand storage and shipment without undue migration from its position in the laminate 16. The adhesive should have a viscosity of 750 to 3000 centipoises at 120° C., and provide a 180 degree peel force, release force of 100 to 300 grams per centimeter if the laminate 10 is to be used for sealing food containers. A peel force of 150 to 200 grams per centimeter has been found suitable. Of course, one of ordinary skill will recognize that the amount of peel force may be increased or decreased, as necessary, for the laminate 10 of the present invention to perform its desired function. Suitable pressure sensitive adhesives are available from The ATO Findley Company of Wauwatosa, WI under the designations LX7110.02, HX-2630-08 and HX5630-03. Yet other suitable adhesives are available from The HB Fuller Company of Vadnais Heights, MN under the designations HL1711X, HL1711XZP, HL-2115X and NW1007XZP. Adhesives selected from the foregoing which do not leave residue on food storage containers have particular utility.

The adhesive should not leave residue on target surfaces, particularly food storage containers, such as wood, plastic, ceramics, glass, paper, metal and other common materials used in the kitchen. One of skill will recognize the target surface may be another portion of the laminate 10.

If desired, the first lamina 12 may be treated with a corona discharge. Such treatment may reduce the amount of residue transferred to the target surface. The corona treatment increases the surface energy of the first lamina 12, promoting preferential adhesion of the active 16 to the first lamina 12, relative to the target surface. The first lamina 12 may have a surface energy of 34 to 50 dynes per centimeter or greater. The active 16 should have a cohesion sufficient to minimize deposition of residue on the target surface.

As noted above, the amount of adhesive should be sufficient to allow it to extrude through the holes in the second lamina 14, for application to the target surface. Additionally, if a permeable first lamina 12 is selected, it may be desirable that the amount of adhesive be great enough to allow extrusion through the holes in the first lamina 12 so that such an active 16 can reach the second surface of the first lamina 12. The adhesive may be applied at a level of 1 to 6 grams per square meter in a first execution, 2 to 4 grams per square meter in a second execution, and 3 grams per square meter in a third execution, for the embodiments described herein. The adhesives may be thermally cured, cured using ultraviolet radiation, cured with electron beam energy or by any other means known in the art.

If desired, a second active 16 may be added to the laminate 10. The second active 16 may supplement, complement or augment the properties of the first active 16 or perform an entirely different function. The second active 16 may provide different properties than the first active 16. The second active 16 may comprise a particulate material for blocking of the adhesive and thereby reduce the amount of adhesion provided by the active 16. Alternatively, the second active 16 may comprise encapsualted adhesive. The capsules of adhesive rupture upon applied pressure against the target surface. Rupture of the capsules then provides additional adhesion of the laminate 10 to the target surface. Thus, the second active 16 may either increase or decrease the amount of adhesion provided by the first active 16.

To facilitate the dispensing of actives 16 intended to be liberated from the laminate 10 upon activation, active 16 properties which are believed to be important include the relative affinity of the active 16 for the target surface versus that for the deformable laminae 12, 14. It is presently believed that the active 16 should preferentially adhere to the target surface to a lesser extent than to the laminate 10 and/or to other portions of the active 16 itself. Said differently, the active 16 has a lesser affinity for the target surface than for itself and/or the laminate 10.

Actives 16 intended to be liberated may inherently possess viscosity and flow characteristics which permit their liberation from their protected location within the sheet material or may require viscosity modification to permit liberation and dispersal. Viscosity modification may be obtained by the selection of actives 16 which undergo a change in viscosity in response to the mode of activation selected. For example, for a mechanical activation such as a compressive force, it may be desirable, and preferably, to employ actives 16 which are commonly referred to as "shear-thinning" (pseudoplastic or thixotropic) actives 16. Examples of such actives 16 include polymer solutions, many gels and pastes such as dentrifice and body creams, paints, gelled wood stains, etc. Other materials behave as shear-thinning materials only after a certain threshold shear stress (yield stress) is reached or exceeded. Such materials are commonly referred to as Bingham plastic materials, and one common example of a active 16 exhibiting such behavior is the type of condiment known as ketchup.

Some of the factors believed to influence the adhesion or affinity of the active 16 for the target surface include: electrostatic or electrical charges; chemical bonds via hydrogen bonding, covalent bonding, ionic bonding, partial ionic bonds (partial dipolar attraction), van der Walls forces, osmotic forces, etc.; capillary pressure (suction); adsorption; absorption; vacuum/suction; etc. Other important factors include the wettability of the active 16 upon the target surface, as reflected by the contact angle of the active 16 on the target surface.

To facilitate spreading or dispersal of the active 16 upon the target surface, particularly to counteract the tendency of the active 16 to remain in a localized distribution pattern given the localized orientation upon the deformable active 16, it is presently preferred to utilize actives 16 which are tailored so as to be wettable on the target surface. Other factors which may aid in dispersion or distribution of the active 16 upon the target surface include the use of actives 16 which exhibit a shear-thinning behavior, as well as mechanical spreading action provided by the user of the composite sheet material to impart a lateral mechanical motion after activation but prior to removal of the deformable material from the target surface. Such lateral mechanical action may also provide additional interaction with the active 16 such as for shear-thinning actives 16 and may provide additional benefits such as lathering, foam generation, scrubbing/abrasive action, etc.

As discussed above, a wide variety of actives 16 may be selected for use in accordance with the principles of the present invention. Representative actives 16 for illustrative purposes include cleansing agents such as soaps and detergents, emollients such as lotions, medicinal agents such as ointments, antiinflammatory creams, etc., health and beauty care products, including antiperspirants, deodorants, time releasable medications, trans-dermal medications, topically efficacious medications, moisturizers, cosmetics, fragrances, and the like. Other more diverse applications for such a sheet material include applicators for automotive and household products such as lubricants, colorants, protectants such as oils and waxes, adhesives, preservatives, and the like, as well as food-oriented applications such as condiments (mustard, ketchup, etc.).

Multiple actives 16 may also be employed which are not only protected from inadvertent contact but segregated from one another initially (on the same face of, or on opposing faces of, the sheet material) and be commingled during the activation process or during subsequent dispensing and/or dispersion operations. Such an arrangement may be particularly useful for actives 16 which beneficially interact with one another (e.g., co-dispensing epoxies, catalyzed reactions, etc.) to provide additional functionality with each other and/or with the target surface. Similar actives 16 with different degrees of affinity for the target surface may be employed, such as pressure sensitive adhesives with different levels of adhesive tack.

One illustrative approach to active 16 selection would be to provide multiple actives 16 which differ in properties (differ in degree of a common property or exhibit differing properties) and/or composition in protrusions which deform in multiple sequential stages of activation. For example, protrusions and/or a second lamina 14 designed to deform and become more two-dimensional at a first level of activation may contain (or be surrounded by) a first active 16, while protrusions and/or a third lamina (not shown) designed to deform and become more two-dimensional at a second level of activation may contain (or be surrounded by) a second active 16, etc. One illustration of such a material would be a sheet material which includes a slightly-tacky pressure sensitive adhesive in or around the protrusions and/or second lamina 14 to deform and a more aggressive pressure sensitive adhesive in or around the protrusions and laminae 12, 14 designed to deform in a later stage of activation. Such a material could thus provide a small initial adherent force which would releasably secure the sheet material to a target surface for proper positioning before activation of the more aggressive (and perhaps more permanent) adhesive in a subsequent activation stage.

If multiple actives 16 are selected for use with the present invention they may be applied to and/or act upon the target surface in parallel, i.e. simultaneously, or in series, i.e. sequentially. If multiple actives 16 are to be simultaneously applied to or act upon the target surface, each may be applied to the inner surface of one of the laminae 12, 14 in a different pattern. This arrangement allows for simultaneous transfer upon activation.

The laminate 10 described herein is particularly well suited for use a food storage wrap. To be adapted to this end use, the laminate 10 may be core wound and of indefinite length, as is known in the art. Alternatively, the laminate 10 may comprise discrete sheets, dispensed individually or in a plurality, as needed. In either format, the laminate should have a width of at least 15 cm in one execution, at least 20 cm in another execution, at least 25 cm in another execution and at least 30 cm in yet another execution. The length may be proportionate to the width, so that an aspect ratio of less than 2:1 (in either orientation) is maintained, if the laminate is dispensed in a cut and stack format. The aforementioned aspect ratio may also be obtainable by properly selecting the length between cuts in a core wound product. The laminate 10 should be sanitary and FDA approved for direct food contact. Also, the laminate 10 should be able to accommodate a temperature range at least encompassing refrigeration to ambient, and in some executions freezing to microwaving.

### Process

The active 16 may be applied to the first surface of the first lamina 12 by uniformly printing throughout the entire first surface of the first lamina 12, by printing in a pattern, by spraying the entirety of the first surface, by spraying in a pattern, by extrusion from a nozzle, by coextrusion with the first lamina 12, all of which are well known in the art. If desired, the active 16 may additionally or instead be applied to the first surface of the second lamina 14 using similar techniques. If the adhesive is sprayed onto the first surface of the second lamina 14, one of skill will recognize that likely the Z-direction thickness of the sidewalls forming the holes in the second lamina 14 will also contain or even be coated with active 16. Such active 16, disposed on the sidewalls of the holes of the second lamina 14, will aid in rapid application of the active 16 to the target surface in response to pressure applied in the Z-direction.

The first and second lamina 14 may be taken from an unwind stand using techniques well known to one of ordinary skill and which will not be repeated here. The laminates 10 may be passed through a nip with a light pressure to ensure joining of the laminae 12, 14. A pressure of 400 to 600 grams per linear centimeter has been found suitable for this purpose. If desired, the laminae 12, 14 may be joined together by embossing, as is well known in the art.

In one alternative embodiment, the first lamina 12 may be extensible. The second lamina 14 may comprise low basis weight regions which do not expose the active 16 therethrough. Upon extension of the laminate 10 in tension, the low basis weight regions of the second lamina 14 rupture. Rupture of the low basis weight regions exposes the active 16 for application to the target surface. Instead of low basis weight regions, the second lamina 14 may comprise a plurality of regions which are simply less extensible than the first lamina 12. Rupture of these regions exposes the active 16 therethrough. This embodiment provides the advantage that the active 16 is concealed and protected until the point of use.

In another alternative embodiment both of the laminae 12, 14 are liquid impermable. However, at least one of the laminae 12, 14 is vapor permeable in response to applied forces. This embodiment provides for delivery of a vaporous active 16, as may be used for menthol or aroma therapy.

## Claims

1. A food storage wrap laminate defining an XY plane and a Z-direction orthogonal thereto, said food storage wrap laminate comprising first and second laminae joined in face-to-face relationship, each of said first lamina and said second lamina having a first face and a second face opposed thereto, said first face of said first lamina and first face of said second lamina being inwardly oriented towards the first said face of said other lamina,
said first lamina comprising an essentially continuous network,
said second lamina comprising an essentially continuous network,
at least one of said first face of said first lamina and said first face of said second lamina having an active disposed thereon,
at least one of said first lamina and said second lamina being permeable to the transfer of active therethrough, wherein said active may contact a target surface in response to an application compressive force.

2. A food storage wrap laminate according to Claim 1, wherein said first lamina has a first thickness, said second lamina has a second thickness and is permeable to the transfer of active therethrough, said active has a third thickness, said second thickness being greater than said third thickness.

3. A food storage wrap laminate according to Claim 2, wherein said active is exposed through said second lamina only after the application of a tensile force to said laminate.

4. A food storage wrap laminate according to Claim 2, wherein said first lamina is impermeable to the transfer of said active therethrough.

5. A food storage wrap laminate according to Claim 4, wherein said first lamina comprises a polymeric film.

6. A food storage wrap laminate according to Claim 5, wherein said polymeric film comprises an unapertured polyolefinic film.

7. A food storage wrap laminate according to Claim 4, wherein said second lamina has an open area of at least 50%.

8. A food storage wrap laminate according to Claim 7, wherein said second lamina comprises a scrim material.

9. A food storage wrap laminate comprising two or more laminae joined in face to face relationship and an active intermediate said laminae, said laminate being releasably adherable to a target surface upon the application of force thereto.

10. A food storage wrap laminate according to Claim 9 comprising at least two actives, each said active being able to act upon a target surface upon the application of force thereto.

11. A food storage wrap laminate acording to Claim 10 wherein the two actives simultaneously act upon said target surface.

12. A food storage wrap laminate acording to Claim 11 wherein at least one said active comprises adhesive.

13. A food storage wrap laminate according to Claim 12 wherein said other active comprises a hydrophyllic component.

14. A food storage wrap laminate according to Claim 9 having first and second laminae, said first lamina being impermeable to the transfer of active therethrough, said second lamina being permeable to the transfer of active therethrough.

15. A food storage wrap laminate according to Claim 10 comprising three laminae, an intermediate lamina and two outboard laminae, said intermediate lamina having a first active disposed thereon, one of said outboard laminae being permeable to the transfer of active therethrough and having a second active disposed thereon.

16. A food storage wrap laminate according to Claim 14 wherein at least one said lamina comprises scrim.

17. A food storage wrap laminate according to Claim 14 wherein said second lamina is deformable in response to compressive forces applied thereto during use.

18. A method of making a laminate, said method comprising the steps of providing a first lamina, said first lamina having a first face and a second face opposed thereto and being unapertured;
disposing an active on said first face of said first lamina;
providing a plurality of nozzles for extruding a flowable material therefrom;
transporting at least one of said first lamina and said plurality of nozzles relative to the other in a first direction;
extruding a plurality of flowable beads of a thermoplastic material from said plurality of nozzles onto said first face of said lamina, whereby said active is interposed between said first lamina and said plurality of beads;
oscillating said plurality of beads in a second direction, said second direction being generally perpendicular to said first direction, whereby said plurality of beads form a patterned second lamina;
curing said plurality of beads such that said essentially continuous network has a thickness extending away from said first face of said first lamina.

19. A method according to Claim 18 wherein said step of extruding said plurality of flowable beads onto said first lamina comprises the step of intermittently extruding said flowable beads.

20. A method according to Claim 19 wherein said step of disposing said active on said first lamina comprises the step of disposing a continuous layer of active on said first lamina.
